# EUROPEAN PATENT SPECIFICATION

(11) **EP 4 499 320 B1**
(45) Date of publication and mention of the grant of the patent: **04.03.2026**
(21) Application number: 22718166.6
(22) Date of filing: 24.03.2022
(51) Int. Cl.: B05B 9/04, B01D 19/00, B05B 15/58, B05D 1/00, F04B 43/00, G02B 1/10, B05C 11/10

(54) **REPLACEABLE CARTRIDGE FOR COATING SYSTEM**
AUSTAUSCHBARE KARTUSCHE FÜR BESCHICHTUNGSSYSTEM
CARTOUCHE REMPLAÇABLE POUR SYSTÈME DE REVÊTEMENT

(43) Date of publication of application: 05.02.2025
(73) Proprietor: Transitions Optical, Ltd., Tuam, Co. Galway (IE)
(72) Inventor: BEAMER, Willard, Palmetto, Florida 34221 (US); MINOR, Lawrence M., Plant City, Florida 33565 (US); PACE, Lex, Largo, Florida 33773 (US)
(74) Representative: f & e patent
(86) International application number: PCT/EP2022/057841
(87) International publication number: WO 2023/179863

(56) References cited:
- CH-A- 305 998
- DE-A1- 4 328 382
- US-A1- 2021 277 848

## Description

### BACKGROUND OF THE INVENTION

### Field of the Invention

The present invention relates to a replaceable cartridge for use with a coating system. In particular, the present invention relates to a replaceable cartridge for use with a coating system, the replaceable cartridge having a reservoir for containing a volume of a coating, a recirculation loop in fluid communication with the reservoir, and a pair of pumps in fluid communication with the recirculation loop.

### Description of the Related Art

With optical articles, such as lenses, one or more surfaces may be subjected to a treatment to enhance the overall performance and function of the optical articles. Examples of such treatments include the formation of one or more coatings on a surface of an optical substrate.

In order to manufacture a coated optical article from an uncoated optical substrate, a variety of manufacturing techniques have been developed. In some processes, an uncoated optical substrate is first washed and dried, after which a coating is applied on at least one surface of the substrate. With coatings that require curing with ultraviolet light, the coated substrate is passed through a curing device having an ultraviolet radiation source. In large scale operations, optical substrates may be processed on an automated production line. Such a production line may have a plurality of processing stations for performing the various operations, including washing, drying, coating, and curing. Typically, a single coating is selected for producing a batch of optical articles.

Due to the batch manufacturing process of large scale operations, it is difficult and time consuming to change the type of coating that is applied to the optical article. It would be desirable to develop a new coating system configured for facilitating the use of a plurality of coatings.

CH 305 998 A relates to a specific pump-operated device for spraying of liquids with a recirculation loop.

### SUMMARY OF THE INVENTION

According to the present invention, provided is a replaceable cartridge for a coating system. The replaceable cartridge includes a reservoir configured for containing a volume of a coating, and a recirculation loop having an inlet and an outlet in fluid communication with the reservoir. The replaceable cartridge further has a first pump in fluid communication with the recirculation loop. The first pump is configured for recirculating the coating from the reservoir through the recirculation loop. The replaceable cartridge further has a second pump in fluid communication with the recirculation loop. The second pump is configured to selectively aspirate the coating from the recirculation loop and deliver the coating to a coating device.

In some non-limiting examples or aspects of the present disclosure, the first pump may be connected to the recirculation loop between the inlet and the outlet of the recirculation loop. The first pump may be configured for continuously recirculating the coating through the recirculation loop. The first pump may be a diaphragm pump. The first pump may include a housing having a first chamber and a second chamber in fluid isolation from the first chamber via a flexible membrane, and a liquid inlet and a liquid outlet in fluid communication with the first chamber. The liquid inlet may have a liquid inlet check valve and the liquid outlet may have a liquid outlet check valve. The first pump further may include an air inlet and an air outlet in fluid communication with the second chamber. The air inlet may have an air inlet check valve operable between an inlet open position and an inlet closed position and the air outlet having an air outlet check valve operable between an outlet open position and an outlet closed position. The air inlet check valve may be operable between the inlet open position and the inlet closed position independent of operation of the air outlet check valve between the outlet open position and the outlet closed position.

In some non-limiting examples or aspects of the present disclosure, the second pump may be downstream of the first pump. The second pump may be a positive displacement piston pump. The second pump may include a housing having an inlet having an inlet valve, an outlet having an outlet valve, and a pumping chamber between the inlet valve and the outlet valve. The second pump further may include a piston disposed within the pumping chamber and configured for reciprocal movement within the pumping chamber via a drive member.

In some non-limiting examples or aspects of the present disclosure, the replaceable cartridge further may include a filter in fluid communication with the recirculation loop. The filter may be configured for filtering the coating circulating through the recirculation loop. The filter may be downstream of the first pump and upstream of the second pump.

In some non-limiting examples or aspects of the present disclosure, the replaceable cartridge further may include a debubbling system in fluid communication with the recirculation loop. The debubbling system may be configured for removing air bubbles in the coating circulating through the recirculation loop. The debubbling system may be downstream of the first pump and upstream of the second pump.

In some non-limiting examples or aspects of the present disclosure, the replaceable cartridge further may include a frame for mounting the reservoir, the first pump, and the second pump. The frame may include electrical connectors for connecting the first pump and the second pump to the coating system.

A replaceable cartridge for a coating apparatus may be characterized by one or more of the following aspects.

In a first aspect, a replaceable cartridge for a coating system has a reservoir configured for containing a volume of a coating; a recirculation loop having an inlet and an outlet in fluid communication with the reservoir; a first pump in fluid communication with the recirculation loop, the first pump configured for recirculating the coating from the reservoir through the recirculation loop; and a second pump in fluid communication with the recirculation loop, the second pump configured to selectively aspirate the coating from the recirculation loop and deliver the coating to a coating device.

In a second aspect, in the replaceable cartridge for a coating system in accordance with the first aspect, the first pump is connected to the recirculation loop between the inlet and the outlet of the recirculation loop.

In a third aspect, in the replaceable cartridge for a coating system in accordance with the first aspect or the second aspect, the first pump is configured for continuously recirculating the coating through the recirculation loop.

In a fourth aspect, in the replaceable cartridge for a coating system in accordance with any one of the first aspect to the third aspect, the first pump is a diaphragm pump.

In a fifth aspect, in the replaceable cartridge for a coating system in accordance with any one of the first aspect to the fourth aspect, the first pump comprises: a housing having a first chamber and a second chamber in fluid isolation from the first chamber via a flexible membrane; a liquid inlet and a liquid outlet in fluid communication with the first chamber, the liquid inlet having a liquid inlet check valve and the liquid outlet having a liquid outlet check valve; an air inlet and an air outlet in fluid communication with the second chamber, the air inlet having an air inlet check valve operable between an inlet open position and an inlet closed position and the air outlet having an air outlet check valve operable between an outlet open position and an outlet closed position.

In a sixth aspect, in the replaceable cartridge for a coating system in accordance with the fifth aspect, the air inlet check valve is operable between the inlet open position and the inlet closed position independent of operation of the air outlet check valve between the outlet open position and the outlet closed position.

In a seventh aspect, in the replaceable cartridge for a coating system in accordance with any one of one of the first aspect to the sixth aspect, the second pump is downstream of the first pump.

In an eighth aspect, in the replaceable cartridge for a coating system in accordance with any one of the first aspect to the seventh aspect, the second pump is a positive displacement piston pump.

In a ninth aspects, in the replaceable cartridge for a coating system in accordance with any one of the first aspect to the eighth aspect, second pump comprises: a housing comprising an inlet having an inlet valve, an outlet having an outlet valve, and a pumping chamber between the inlet valve and the outlet valve; and a piston disposed within the pumping chamber and configured for reciprocal movement within the pumping chamber via a drive member.

In a tenth aspect, in the replaceable cartridge for a coating system in accordance with any one of the first aspect to the ninth aspect, a filter is provided in fluid communication with the recirculation loop, wherein the filter is configured for filtering the coating circulating through the recirculation loop.

In an eleventh aspect, in the replaceable cartridge for a coating system in accordance with the tenth aspect, the filter is downstream of the first pump and upstream of the second pump.

In a twelfth aspect, in the replaceable cartridge for a coating system in accordance with any one of the first aspect to the eleventh aspect, a debubbling system is provided in fluid communication with the recirculation loop, the debubbling system configured for removing air bubbles in the coating circulating through the recirculation loop.

In a thirteenth aspect, in the replaceable cartridge for a coating system in accordance with the twelfth aspect, the debubbling system is downstream of the first pump and upstream of the second pump.

In a fourteenth aspect, in the replaceable cartridge for a coating system in accordance with any one of the first aspect to the thirteenth aspect, a frame is provided for mounting the reservoir, the first pump, and the second pump.

In a fifteenth aspect, in the replaceable cartridge for a coating system in accordance with the fourteenth aspect, the frame comprises electrical connectors for connecting the first pump and the second pump to the coating system.

The features that characterize the present invention are pointed out with particularity in the claims, which are annexed to and form a part of this disclosure. These and other features of the invention, its operating advantages, and the specific objects obtained by its use will be more fully understood from the following detailed description in which non-limiting examples of the invention are illustrated and described.

### BRIEF DESCRIPTION OF THE DRAWINGS

**FIG. 1** is a representative schematic view of a coating system in accordance with some examples of the present disclosure;
**FIG. 2** is a representative perspective view of an optical article;
**FIG. 3** is a representative schematic view of a coating material storage system for use with a coating system;
**FIG. 4** is a perspective view of a replaceable cartridge configured for use with the coating material storage system of **FIG. 3****;**
**FIG. 5** is a perspective view of a first pump of the replaceable cartridge shown in **FIG. 4****;**
**FIG. 6** is a perspective cross-sectional view of the first pump shown in **FIG. 4****;**
**FIG. 7** is a side cross-sectional view of a second pump of the replaceable cartridge shown in **FIG. 4****.**
**In** **FIGS. 1-7****,** like characters refer to the same components and elements, as the case may be, unless otherwise stated.

### DETAILED DESCRIPTION OF THE INVENTION

As used herein, the singular form of "a", "an", and "the" include plural referents unless the context clearly dictates otherwise.

Spatial or directional terms, such as "left", "right", "inner", "outer", "above", "below", and the like, relate to the invention as shown in the drawing figures and are not to be considered as limiting as the invention can assume various alternative orientations.

All numbers used in the specification and claims are to be understood as being modified in all instances by the term "about". By "about" is meant plus or minus twenty-five percent of the stated value, such as plus or minus ten percent of the stated value. However, this should not be considered as limiting to any analysis of the values under the doctrine of equivalents.

Unless otherwise indicated, all ranges or ratios disclosed herein are to be understood to encompass the beginning and ending values and any and all subranges or subratios subsumed therein. For example, a stated range or ratio of "1 to 10" should be considered to include any and all subranges or subratios between (and inclusive of) the minimum value of 1 and the maximum value of 10; that is, all subranges or subratios beginning with a minimum value of 1 or more and ending with a maximum value of 10 or less. The ranges and/or ratios disclosed herein represent the average values over the specified range and/or ratio.

The terms "first", "second", and the like are not intended to refer to any particular order or chronology, but refer to different conditions, properties, or elements.

The term "at least" is synonymous with "greater than or equal to".

The term "not greater than" is synonymous with "less than or equal to".

As used herein, "at least one of" is synonymous with "one or more of". For example, the phrase "at least one of A, B, or C" means any one of A, B, or C, or any combination of any two or more of A, B, or C. For example, "at least one of A, B, or C" includes A alone; or B alone; or C alone; or A and B; or A and C; or B and C; or all of A, B, and C.

The term "adjacent" means proximate to but not in direct contact with.

The term "includes" is synonymous with "comprises".

As used herein, the terms "parallel" or "substantially parallel" mean a relative angle as between two objects (if extended to theoretical intersection), such as elongated objects and including reference lines, that is from 0° to 5°, or from 0° to 3°, or from 0° to 2°, or from 0° to 1°, or from 0° to 0.5°, or from 0° to 0.25°, or from 0° to 0.1°, inclusive of the recited values.

As used herein, the terms "perpendicular" or "substantially perpendicular" mean a relative angle as between two objects at their real or theoretical intersection is from 85° to 90°, or from 87° to 90°, or from 88° to 90°, or from 89° to 90°, or from 89.5° to 90°, or from 89.75° to 90°, or from 89.9° to 90°, inclusive of the recited values.

The term "optical" means pertaining to or associated with light and/or vision. For example, an optical element, article, or device can be chosen from ophthalmic elements, articles, and devices; display elements, articles, and devices; visors; windows; and mirrors.

The term "ophthalmic" means pertaining to or associated with the eye and vision. Non-limiting examples of ophthalmic articles or elements include corrective and non-corrective lenses, including single vision or multi-vision lenses, which may be either segmented or non-segmented multi-vision lenses (such as, but not limited to, bifocal lenses, trifocal lenses, and progressive lenses), as well as other elements used to correct, protect, or enhance (cosmetically or otherwise) vision, including without limitation, contact lenses, intra-ocular lenses, magnifying lenses, and protective lenses or visors.

As used herein, the terms "lens" and "lenses" mean and encompass at least individual lenses, lens pairs, partially formed (or semi-finished) lenses, fully formed (or finished) lenses, and lens blanks.

As used herein, the term "transparent", such as used in connection with a substrate, film, material, and/or coating, means that the indicated substrate, film, material, and/or coating has the property of transmitting visible light without appreciable scattering so that objects lying beyond are visibly observable.

As used herein, the terms "ultraviolet", "UV", "ultraviolet light", or "ultraviolet radiation" mean electromagnetic radiation having a wavelength in the range of 10 nm to 400 nm.

As used herein, the terms "infrared", "IR", "infrared light", or "infrared radiation" mean electromagnetic radiation having a wavelength in the range of 780 nm to 1 mm.

As used herein, the term "ultrasonic" refers to one or more sound waves having a frequency higher than approximately 20,000 Hz (20 kHz).

As used herein, the term "coating" means a supported film derived from a flowable coating material, which can optionally have a uniform thickness, and specifically excludes polymeric sheets. The terms "layer" and "film" each encompass both coatings (such as a coating layer or a coating film) and sheets, and a layer can include a combination of separate layers, including sub-layers and/or over-layers. The verb "coating" means, within appropriate context, the process of applying a coating material (or materials) to the substrate to form a coating (or coating layer).

As used herein, the terms "cure", "cured", and related terms, mean that at least a portion of the polymerizable and/or crosslinkable components that form a curable composition are at least partially polymerized and/or crosslinked. In accordance with some examples, the degree of crosslinking can range from 5% to 100% of complete crosslinking. In accordance with some further examples, the degree of crosslinking can range from 30% to 95%, such as 35% to 95%, or 50% to 95%, or 50% to 85% of complete crosslinking. The degree of crosslinking can range between any combination of these recited lower and upper values, inclusive of the recited values.

As used herein, the terms "communication" and "communicate" may refer to the reception, receipt, transmission, transfer, provision, and/or the like, of information (e.g., data, signals, messages, instructions, commands, and/or the like).

As used herein, a "graphical user interface" or "GUI" refers to a generated display with which a user may interact, either directly or indirectly (e.g., through a button, keyboard, mouse, touchscreen etc.).

The discussion of the invention may describe certain features as being "particularly" or "preferably" within certain limitations (e.g., "preferably", "more preferably", or "even more preferably", within certain limitations). It is to be understood that the invention is not limited to these particular or preferred limitations but encompasses the entire scope of the disclosure.

The invention comprises, consists of, or consists essentially of the following examples of the invention, in any combination. Various examples of the invention may be discussed separately. However, it is to be understood that this is simply for ease of illustration and discussion. In the practice of the invention, one or more aspects of the invention described in one example can be combined with one or more aspects of the invention described in one or more of the other examples.

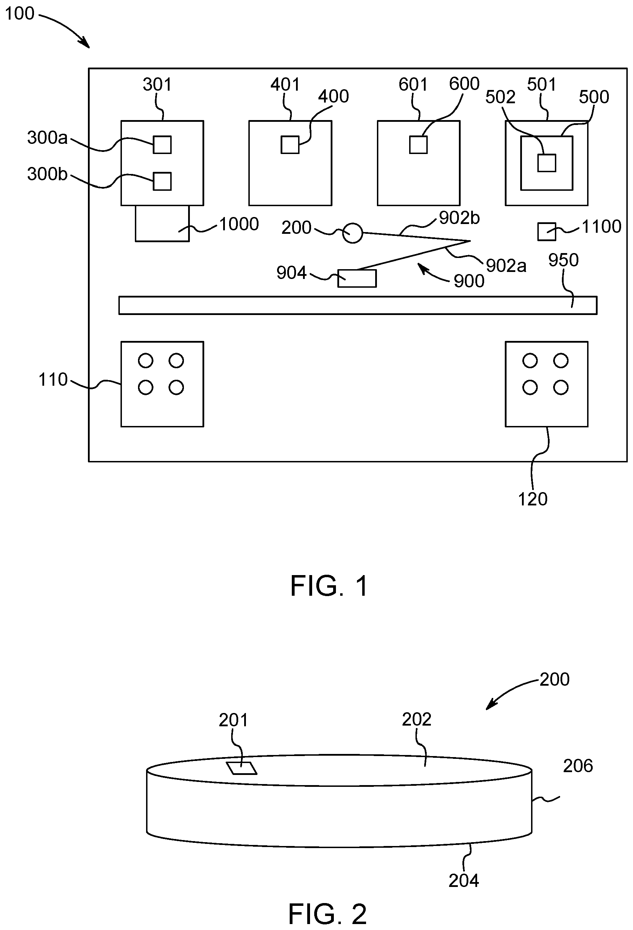

With reference to **FIG. 1****,** a coating system **100** is shown in accordance with some examples or aspects of the present disclosure. The coating system **100,** as described herein, and in accordance with some examples, provides a low cost, small scale coating system configured for applying one or more coating materials to an optical article **200.** The coating system **100** can include a surface pretreatment station (such as, but not limited to, a plasma pretreatment station), a washing/drying station, one or more coating apparatuses (utilizing one or more of multiple coatings and combinations of coatings), and one or more curing apparatuses (such as UV, IR, and/or thermal curing apparatuses) or combinations thereof. The coating system **100** of the present invention can, with some examples, be operated with the formation of minimal waste streams and/or waste materials.

The coating system **100** of the present disclosure can, with some examples, be used for the production of optical articles **200,** which each independently have the same or different coating materials applied thereon. In some examples, the coating system **100** of the present disclosure can be at least partially automated and optionally incorporated into art-recognized product tracking and control systems.

With reference to **FIG. 1****,** the coating system **100** generally has a plurality of stations, each having an apparatus configured for performing a specified task. For example, the coating system **100** may have a coating station **301** having at least one coating apparatus **300** for coating the optical article **200** and a curing station **401** having at least one curing apparatus **400** for curing the coated optical article **200.** Optionally, the coating system **100** has a pre-treatment station **500,** and/or a washing and drying station **600.** A placement arm **900** may be provided for moving the optical article **200** between various stations of the coating system **100.** In some examples or aspects, a conveyor belt **950** may be provided for moving the optical articles **200** between different stations of the coating system **100** or within any single station of the coating system **100.**

With continued reference to **FIG. 1****,** the coating system **100** may have a loading station **110** having a plurality of blank optical articles **200** that are to be processed through the coating system **100.** The coating system **100** further may include an unloading station **120** configured for storing one or more coated optical articles **200** after the one or more optical articles **200** have been processed through the coating system **100.**

The coating system **100** can, with some examples or aspects, be used to coat a variety of articles, such as, but not limited to, optical articles **200.** With reference to **FIG. 2****,** the optical article **200** has a forward or top surface **202,** a rearward or bottom surface **204,** and a side surface **206** extending between the top surface **202** and the bottom surface **204.** When the optical article **200** is an ophthalmic lens, the bottom surface **204** is opposed to the eye of an individual wearing the optical article **200,** the side surface **206** typically resides within a supportive frame, and the top surface **202** faces incident light (not shown), at least a portion of which passes through the optical article **200** and into the individual's eye. With some examples or aspects, at least one of the top surface **202,** the bottom surface **204,** and the side surface **206** may have various shapes including, but not limited to, round, flat, cylindrical, spherical, planar, substantially planar, plano-concave and/or plano-convex, and curved, including, but not limited to, convex, and/or concave.

The optical article **200** that is coated with the system and method of the present disclosure can, with some examples, be formed from and correspondingly include organic materials, inorganic materials, or combinations thereof (for example, composite materials).

Examples of organic materials that can be used as optical articles **200** in accordance with various examples of the present invention, include polymeric materials, such as homopolymers and copolymers, prepared from the monomers and mixtures of monomers disclosed in U.S. Patent No. 5,962,617 and in U.S. Patent No. 5,658,501 from column 15, line 28 to column 16, line 17. For example, such polymeric materials can be thermoplastic or thermoset polymeric materials, can be transparent or optically clear, and can have any refractive index required. Examples of such monomers and polymers include: polyol(allyl carbonate) monomers, e.g., allyl diglycol carbonates such as diethylene glycol bis(allyl carbonate), which monomer is sold under the trademark CR-39 by PPG Industries, Inc.; polyurea-polyurethane (polyurea-urethane) polymers, which are prepared, for example, by the reaction of a polyurethane prepolymer and a diamine curing agent, a composition for one such polymer being sold under the trademark TRIVEX by PPG Industries, Inc.; polyol(meth)acryloyl terminated carbonate monomer; diethylene glycol dimethacrylate monomers; ethoxylated phenol methacrylate monomers; diisopropenyl benzene monomers; ethoxylated trimethylol propane triacrylate monomers; ethylene glycol bismethacrylate monomers; poly(ethylene glycol) bismethacrylate monomers; urethane acrylate monomers; poly(ethoxylated bisphenol A dimethacrylate); poly(vinyl acetate); poly(vinyl alcohol); poly(vinyl chloride); poly(vinylidene chloride); polyethylene; polypropylene; polyurethanes; polythiourethanes; thermoplastic polycarbonates, such as the carbonate-linked resin derived from bisphenol A and phosgene, one such material being sold under the trademark LEXAN; polyesters, such as the material sold under the trademark MYLAR; poly(ethylene terephthalate); polyvinyl butyral; poly(methyl methacrylate), such as the material sold under the trademark PLEXIGLAS, and polymers prepared by reacting polyfunctional isocyanates with polythiols or polyepisulfide monomers, either homopolymerized or co-and/or terpolymerized with polythiols, polyisocyanates, and polyisothiocyanates; and optionally ethylenically unsaturated monomers or halogenated aromatic-containing vinyl monomers. Also contemplated are copolymers of such monomers and blends of the described polymers and copolymers with other polymers, for example, to form block copolymers or interpenetrating network products.

With some examples of the present invention, the optical article **200** can be an ophthalmic article. Examples of organic materials suitable for use in forming ophthalmic articles include art-recognized polymers that are useful as ophthalmic articles, such as organic optical resins that are used to prepare optically clear castings for optical applications, such as ophthalmic lenses.

Examples of inorganic materials that can be used as optical articles **200** with some examples of the present invention include glasses, minerals, ceramics, and metals. With some examples, the optical article **200** can include glass. In other examples, the optical article **200** can have a reflective surface, for example, a polished ceramic substrate, metal substrate, or mineral substrate. In other examples, a reflective coating or layer (e.g., a metal layer, such as a silver layer) can be deposited or otherwise applied to a surface of an inorganic or an organic substrate to make it reflective or to enhance its reflectivity.

Optical articles **200** that can be used with the method according to some examples of the present disclosure can also include untinted, tinted, linearly polarizing, circularly polarizing, elliptically polarizing, photochromic, or tinted-photochromic substrates. As used herein with reference to optical articles **200,** the term "untinted" means optical articles that are essentially free of coloring agent additions (such as conventional dyes) and have an absorption spectrum for visible radiation that does not vary significantly in response to actinic radiation. Further, with reference to optical articles **200,** the term "tinted" means substrates that have a coloring agent addition (such as conventional dyes) and an absorption spectrum for visible radiation that does not vary significantly in response to actinic radiation.

With reference to **FIG. 1****,** a surface-treated and cleaned optical article **200** can be transferred to the coating apparatus **300** for applying one or more coatings to at least one surface of the optical article **200.** The coating apparatus **300** may be a plurality of coating apparatuses **300.** The one or more coatings may be applied on at least one surface of the optical article **200** using a number of different techniques. In some examples or aspects, the optical article **200** may be immersed into a liquid coating material. After the optical article is pulled out of the liquid, the liquid coating material forms a coating layer on the immersed surface(s) of the optical article **200.** In other examples or aspects, as disclosed herein, a liquid coating material is deposited onto a surface of the optical article **200,** which is then rotated at high speed to spread the coating material into a thin film covering the surface of the optical article **200.** In further examples or aspects, the coating apparatus **300** may be an inkjet printing apparatus that is configured to apply a coating material in the form of extremely fine droplets on a printing surface, such as one or more surfaces of the optical article **200.** In various examples or aspects, the coating apparatus **300** may be configured for applying a uniform coating or a gradient coating on at least one surface of the optical article **200.**

With reference to **FIG. 1****,** each coating apparatus **300** is in fluid communication with a coating material storage system **1000** (hereinafter referred to as "storage system **1000**"). The storage system **1000** is configured for containing the coating material and selectively supplying the coating material to each coating apparatus **300** during a coating application process. In some examples or aspects, the storage system **1000** may contain a single coating material that is selectively supplied to each coating apparatus **300** during the coating application process. In other examples or aspects, the storage system **1000** may contain a plurality of different coating materials, each of which can be independently selected and supplied to each coating apparatus **300** during the coating application process. In this manner, a plurality of coating materials may be supplied to each coating apparatus **300** to create a desired mixture of the coating materials.

The coating material can, with some examples, include a curable resin composition, and optionally, a solvent. The coating material can be in the form of art-recognized liquid coating materials and powder coating materials. The coating material can be thermoplastic, radiation curable such as by ultraviolet radiation or electron beam, or thermosetting coating material. With some examples, the coating materials are selected from curable or thermosetting coating materials. Coating materials can include kinetic enhancing additives, photoinitiators, and thermal initiators. With some examples, coating materials can include a static dye, a photochromic material, or a combination thereof. Alternatively or additionally, the optical article **200** can include a static dye, a photochromic material, or a combination thereof. Various coating materials can be used for applying primer coatings and films; protective coatings and films, including transitional coatings and films and abrasion resistant coatings and films; anti-reflective coatings and films; polarizing coatings and films; and combinations thereof.

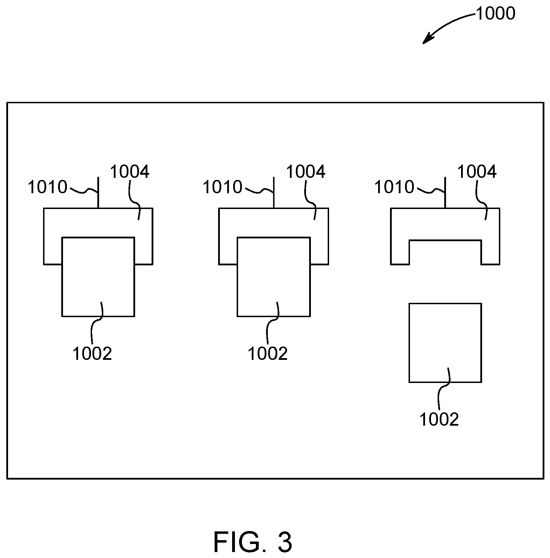

With reference to **FIG. 3****,** the storage system **1000** may have at least one replaceable cartridge **1002.** Each replaceable cartridge **1002** of the storage system **1000** is configured for containing the coating material, recirculating the coating material in a recirculation loop, and selectively dispensing a desired amount of coating material to the coating apparatus **300.** In some examples or aspects, a plurality of replaceable cartridges **1002** are provided. Each replaceable cartridge **1002** may contain a different coating material. In some examples or aspects, at least some of the plurality of replaceable cartridges **1002** may contain the same coating material.

With continued reference to **FIG. 3****,** each replaceable cartridge **1002** can be removed from the storage system **1000** for cleaning, refilling, and servicing. For example, the storage system **1000** may have a plurality of bays **1004,** each of which is configured to receive a single replaceable cartridge **1002.** Each bay **1004** has a first pneumatic connector **1006** and a first electric connector **1008** configured for connecting to the corresponding pneumatic and electric connectors on the replaceable cartridge **1002.** In this manner, each replaceable cartridge **1002** can be quickly and easily connected to or disconnected from the respective bay **1004** of the storage system **1000.** In some examples or aspects, inserting the replaceable cartridge **1002** into the bay **1004** may automatically establish a pneumatic and electric connection between the replaceable cartridge **1002** and the storage system **1000.** In other examples or aspects, pneumatic and electrical connections between the replaceable cartridge **1002** and the bay **1004** can be done separately after inserting the replaceable cartridge **1002** into the bay **1004.** Similarly, removing the replaceable cartridge **1002** from the bay **1004** may automatically disconnect the pneumatic and electric connections between the replaceable cartridge **1002** and the storage system **1000.** In other examples or aspects, pneumatic and electrical connections between the replaceable cartridge **1002** and the bay **1004** can be disconnected separately prior to or after removal of the replaceable cartridge **1002** from the bay **1004.**

With continued reference to **FIG. 3****,** when connected to the bay **1004** of the storage system **1000,** each replaceable cartridge **1002** may be fluidly connected to a delivery line **1010** configured to deliver the coating material from the replaceable cartridge **1002** to the at least one coating apparatus **300.** In some examples or aspects, each replaceable cartridge **1002,** when connected to the respective bay **1004,** may be connected to the at least one coating apparatus **300** via a dedicated delivery line **1010.** In other examples or aspects, delivery lines **1010** from each replaceable cartridge **1002** may be connected to a manifold that is then connected to the at least one coating apparatus **300.**

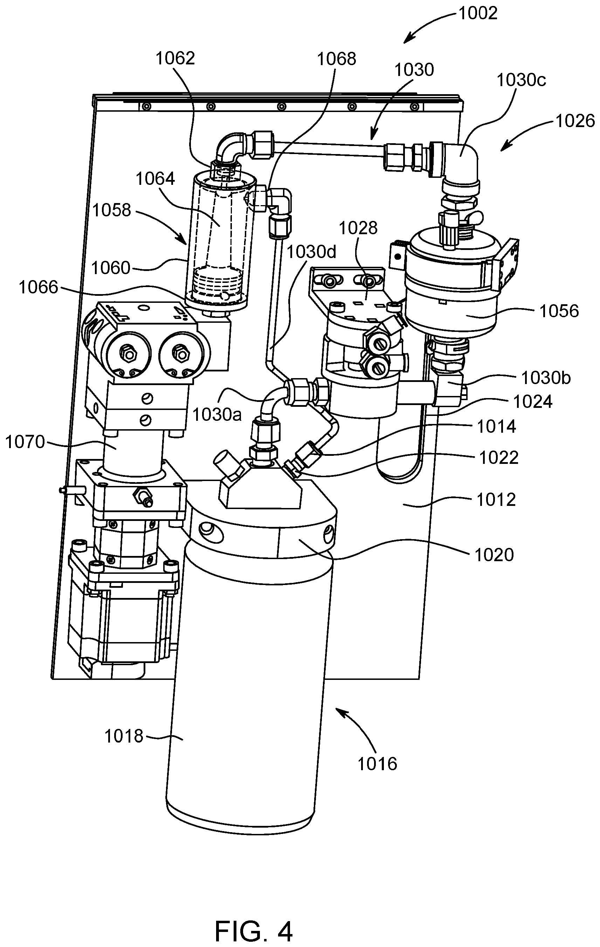

With reference to **FIG. 4****,** the replaceable cartridge **1002** has a frame **1012** configured for supporting various components for containing the coating material, recirculating the coating material in a recirculation loop, and selectively dispensing a desired amount of coating material to the coating apparatus **300.** The frame **1012** may be configured to removably or non-removably support the various components. In some examples or aspects, the frame **1012** may be configured for interacting with the bay **1004,** such as by having at least one side that is slidably engagable with at least a portion of the bay **1004.** The frame **1012** can, in some examples or aspects, be a planar material having a sufficient thickness to support the various components configured for containing the coating material, recirculating the coating material in a recirculation loop, and selectively dispensing a desired amount of coating material to the coating apparatus **300.** The frame **1012** can be made from a metal material, a plastic material, or a combination of metal and plastic materials. In some examples or aspects, the frame **1012** may have a handle **1014** for handling the frame **1012** during removal of the frame **1012** from the bay **1004** and/or insertion of the frame **1012** into the bay **1004.**

With continued reference to **FIG. 4****,** the replaceable cartridge **1002** has a reservoir **1016** configured for containing a volume of a coating material. In some examples or aspects, the reservoir **1016** has a storage portion **1018** defining an interior for containing the coating material, and a cap **1020** that is removably connectable to the storage portion **1018** and is configured for enclosing the interior of the storage portion **1018.** At least one of the storage portion **1018** and the cap **1020** may be removably connected to the frame **1012.** In some examples or aspects, the reservoir **1016** may have a volume of 1L to 20L. The coating material inside the reservoir **1016** may be kept at ambient pressure, a vacuum pressure, or a positive pressure.

In some examples or aspects, the storage portion **1018** may be a conventional coating reservoir that is provided by a manufacturer of the coating material. Such a storage portion **1018** may be removably connectable to cap **1020.** In this manner, the storage portion **1018** may be discarded after the coating material is used up and a new storage portion **1018** filled with the coating material can be connected to the cap **1020.** In other examples or aspects, the storage portion **1018** may be re-fillable with the coating material after the coating material is used up.

With continued reference to **FIG. 4****,** the cap **1020** has an outlet **1022** configured for delivering the coating material out of the storage portion **1018** and an inlet **1024** configured for returning the coating material into the storage portion **1018.** The outlet **1022** and inlet **1024** are connected to a recirculation loop **1026** that is configured for circulating the coating material from the reservoir **1016** using a first pump **1028.** In some examples or aspects, the recirculation loop **1026** comprises tubing **1030** having a first end connected to the outlet **1022** and a second end connected to the inlet **1024.** In this manner, the recirculation loop **1026** is in fluid communication with the reservoir **1016.** Various additional elements may be disposed in-line with the tubing **1030** between the first end and the second end such that these additional elements are in fluid communication with the recirculation loop **1026,** as described herein. When additional elements are provided in-line with the tubing **1030,** the tubing **1030** may comprise a plurality of tubing segments interconnecting the various elements and being in fluid communication with each other.

With continued reference to **FIG. 4****,** the replaceable cartridge **1002** has the first pump **1028** in-line with the recirculation loop **1028.** The first pump **1028** is connected to the outlet **1022** of the reservoir **1016** via a first tubing segment 1030a. According to the invention the first pump **1028** is configured to aspirate the coating material from the reservoir **1016** and pump the coating material through the recirculation loop **1026** to be delivered back into the storage portion **1018** via the inlet **1024** or to be delivered to the at least one coating apparatus **300** via a second pump, as described herein. In some examples or aspects, the first pump **1028** may be configured to continuously circulate the coating material through the recirculation loop **1016** while the replaceable cartridge **1002** is connected to the coating system **100.** In this manner, the coating material is continuously mixed to prevent separation of solids and to extend the life of the coating material.

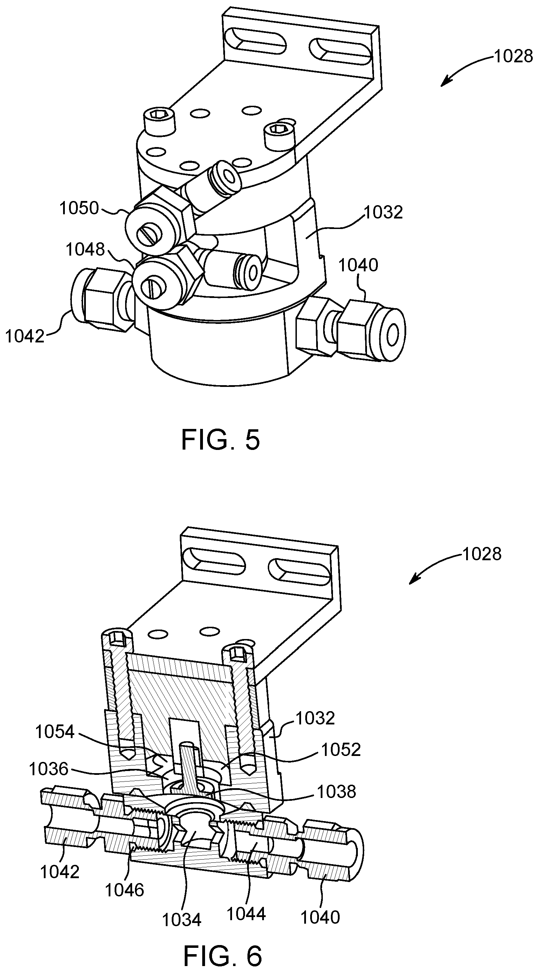

With reference to **FIGS. 5-6****,** the first pump **1028** is a diaphragm pump configured for recirculating the coating material from the reservoir **1016** through the recirculation loop **1026.** In some examples or aspects, the first pump **1028** may be any other kind of pump that is configured for continuously recirculating the coating material from the reservoir **1016** through the recirculation loop **1026.** When embodied as a diaphragm pump, and as shown in **FIG. 6****,** the first pump **1028** includes a housing **1032** having a first chamber **1034** and a second chamber **1036** in fluid isolation from the first chamber **1034** via a flexible membrane **1038.** The flexible membrane **1038** is configured to deflect in response to a pressure differential between the first chamber **1034** and the second chamber **1036.** In this manner, by controlling the pressure differential across the chambers **1034, 1036,** the first pump **1028** can pump the coating material.

With continued reference to **FIGS. 5-6****,** the first pump **1028** further includes a liquid inlet **1040** and a liquid outlet **1042** in fluid communication with the first chamber **1034.** The liquid inlet **1040** has a liquid inlet check valve **1044** and the liquid outlet **1042** has a liquid outlet check valve **1046.** The liquid inlet check valve **1044** and the liquid outlet check valve **1046** may be one-way check valves configured to permit flow in a first direction and prevent flow in a second direction opposite to the first direction. The first pump **1028** further includes an air inlet **1048** and an air outlet **1050** in fluid communication with the second chamber **1036.** In some examples or aspects, the air inlet **1048** has an air inlet check valve **1052** operable between an air inlet open position and an air inlet closed position and the air outlet **1050** has an air outlet check valve **1054** operable between an air outlet open position and an air outlet closed position. Similar to the liquid inlet and outlet check valves **1044, 1044,** the air inlet check valve **1052** and the air outlet check valve **1054** may be one-way check valves configured to permit flow in a first direction and prevent flow in a second direction opposite to the first direction.

In some examples or aspects, the air inlet check valve **1052** may be operable between the air inlet open position and the air inlet closed position independent of operation of the air outlet check valve **1054** between the air outlet open position and the air outlet closed position. For example, a controller **1100** (shown in **FIG. 1**) may be provided for controlling independent operation of the air inlet check valve **1052** and the air outlet check valve **1054.** By controlling the state of the air inlet check valve **1052** and the air outlet check valve **1054,** pressure in the second chamber **1036** can be controlled to, in turn, control the position of the flexible membrane **1038.** In this manner, by controlling a position of the flexible membrane **1038,** liquid coating composition can be pumped through the first chamber **1034.**

With reference to **FIG. 4****,** the replaceable cartridge **1002** has a filter **1056** positioned in-line and in fluid communication with the recirculation loop **1028.** The filter **1056** may be positioned downstream of the first pump **1028** and may be connected to the liquid outlet **1042** of the first pump **1028** via a second tubing segment **1030b.** The filter **1056** may be configured for filtering the coating material circulating through the recirculation loop **1026.**

With reference to **FIG. 4****,** the replaceable cartridge **1002** has a de-bubbling system **1058** positioned in-line and in fluid communication with the recirculation loop **1028.** The de-bubbling system **1058** may be positioned downstream of the filter **1056** and may be connected to the filter **1056** via a third tubing segment **1030c.** The de-bubbling system **1058** may be configured for removing air bubbles in the coating material circulating through the recirculation loop **1026.**

With continued reference to **FIG. 4****,** the de-bubbling system **1058** has a chamber **1060** configured for receiving the coating material from the filter **1056** via the third tubing segment **1030c.** The third tubing segment **1030c** may be connected to a first end **1062** of the chamber **1060.** A conical separator **1064** is positioned within the chamber **1060** and is configured for attracting any air bubbles in the coating material as the coating material flows down the conical separator **1064.** The attracted air bubbles are dislodged from the conical separator **1064** and float toward the first end **1062** of the chamber **1060.** A second end **1066** of the chamber **1060** is positioned at an inlet of the second pump, as described herein. As the coating material fills the chamber **1060,** the level of the coating material in the chamber **1060** rises in a direction from the second end **1066** toward the first end **1062.** A chamber outlet **1068** is provided in a sidewall of the chamber **1060** proximate to the first end **1062.** The chamber outlet **1068** is in fluid communication with the reservoir **1026** via a fourth tubing segment **130d.** In this manner, de-bubbled coating material can be returned from the de-bubbling system **1058** into the reservoir **1026** via the fourth tubing segment **1030d.**

With continued reference to **FIG. 4****,** the replaceable cartridge **1002** has a second pump **1070** positioned in-line and in fluid communication with the recirculation loop **1028.** The second pump **1070** is connected to the second end **1066** of the de-bubbling system **1058** and is configured to aspirate the coating material from the chamber **1060** of the de-bubbling system **1058.** According to the invention, the second pump **1070** is operable to aspirate a select amount of the coating material from the recirculation loop **1026,** such as from the de-bubbling system **1058,** and deliver the select amount of the coating material to the at least one coating apparatus **300.**

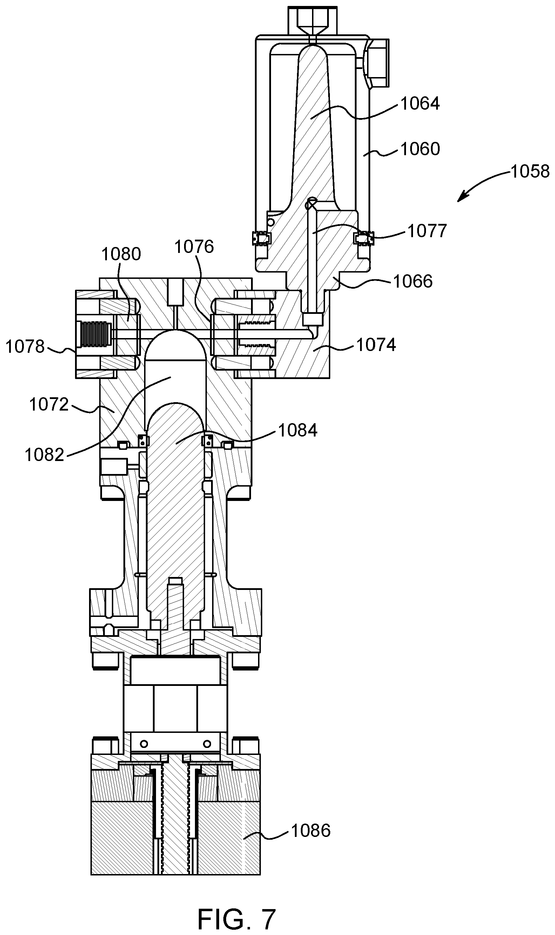

With reference to **FIG. 7****,** the second pump **1070** may be a piston pump. In some examples or aspects, the second pump **1070** may be any other kind of pump that is configured for aspirating a select amount of the coating material from the recirculation loop **1026** and delivering the coating material to the at least one coating apparatus **300.** When embodied as a piston pump, the second pump **1070** includes a housing **1072** having an inlet **1074** with an inlet valve **1076,** an outlet **1078** having an outlet valve **1080,** and a pumping chamber **1082** between the inlet valve **1076** and the outlet valve **1080.** The inlet valve **1076** is in fluid communication with the recirculation loop **1026,** such as via an inlet tube **1077** connected to the de-bubbling system **1058** while the outlet valve **1080** is in fluid communication with the at least one coating apparatus **300.** The piston pump **1070** further includes a piston **1084** disposed within the pumping chamber **1082** and configured for reciprocal movement within the pumping chamber **1082** via a drive member **1086.** The drive member **1086** may include an actuator configured for reciprocally moving the piston **1084.** In some examples or aspects, the actuator may be a stepper motor. A controller may be configured to control operation of the actuator to accurately dispense a select amount of the coating material from the recirculation loop **1026** and deliver the coating material to the at least one coating apparatus **300.** In some examples or aspects, each replaceable cartridge **1002** may have various additional devices, such as heaters, mixers, or the like, may be associated with each replaceable cartridge **1002** for preparing the coating material prior to delivery to the at least one coating apparatus **300.**

With reference to **FIG. 1****,** the coating system **100** has at least one controller **1100** operatively connected to at least one component of the coating system **100.** In some examples or aspects, the at least one controller **1100** may be configured to control operation of at least one component of the coating apparatus **300,** the curing apparatus **400,** the pre-treatment station **500,** the washing and drying station **600,** the placement arm **900,** and the at least one replaceable cartridge **1000.** In other examples or aspects, separate controllers **1100** may be provided for each of the coating apparatus **300,** the curing apparatus **400,** the pre-treatment station **500,** the washing and drying station **600,** the placement arm **900,** and the at least one replaceable cartridge **1000.**

In some examples or aspects, the at least one controller **1100** may be a microprocessor controller. The at least one controller **1100** may be configured for pulse width modulated (PWM) operation, wherein analog operation of at least one component of the coating apparatus **300,** the curing apparatus **400,** the pre-treatment station **500,** the washing and drying station **600,** the placement arm **900,** and the at least one replaceable cartridge **1000** can be achieved using digital control signals. In some examples or aspects, the at least one controller **1100** may be configured for continuously modulated control of at least one component of the coating apparatus **300,** the curing apparatus **400,** the pre-treatment station **500,** the washing and drying station **600,** the placement arm **900,** and the at least one replaceable cartridge **1000.** The at least one controller **1100** may have memory configured for storing one or more predetermined automated processes. In some examples or aspects, the at least one controller **1100** may be configured for operating on a 110V or a 220V AC power circuit, and/or on battery power. In other examples or aspects, the at least one controller **1100** may be configured for operating on a 12V DC power circuit.

The present invention has been described with reference to specific details of particular examples thereof. It is not intended that such details be regarded as limitations upon the scope of the invention except insofar as and to the extent that they are included in the accompanying claims.

## Claims

1. A replaceable cartridge (1002) for a coating system (100), the replaceable cartridge (1002) comprising:
a reservoir (1016) configured for containing a volume of a coating;
a recirculation loop (1026) having an inlet and an outlet in fluid communication with the reservoir (1016); and
a first pump (1028) in fluid communication with the recirculation loop (1026), the first pump (1028) configured for recirculating the coating from the reservoir (1016) through the recirculation loop (1026); **characterized in that** the replaceable cartridge (1002) further comprises a second pump (1070) in fluid communication with the recirculation loop (1026), the second pump (1070) configured to selectively aspirate the coating from the recirculation loop (1026) and deliver the coating to a coating device (300).

2. The replaceable cartridge (1002) according to claim 1, wherein the first pump (1028) is connected to the recirculation loop (1026) between the inlet and the outlet of the recirculation loop (1026).

3. The replaceable cartridge (1002) according to claim 1 or claim 2, wherein the first pump (1028) is configured for continuously recirculating the coating through the recirculation loop (1026).

4. The replaceable cartridge (1002) according to any one of claims 1 to 3, wherein the first pump (1028) is a diaphragm pump.

5. The replaceable cartridge (1002) according to any one of claims 1 to 4, wherein the first pump (1028) comprises:
a housing (1032) having a first chamber (1034) and a second chamber (1036) in fluid isolation from the first chamber (1034) via a flexible membrane (1038);
a liquid inlet (1040) and a liquid outlet (1042) in fluid communication with the first chamber (1034), the liquid inlet (1040) having a liquid inlet check valve (1044) and the liquid outlet (1042) having a liquid outlet check valve (1046);
an air inlet (1048) and an air outlet (1050) in fluid communication with the second chamber (1036), the air inlet (1048) having an air inlet check valve (1052) operable between an inlet open position and an inlet closed position and the air outlet having an air outlet check valve (1054) operable between an outlet open position and an outlet closed position.

6. The replaceable cartridge (1002) according to claim 5, wherein the air inlet check valve (1052) is operable between the inlet open position and the inlet closed position independent of operation of the air outlet check valve (1054) between the outlet open position and the outlet closed position.

7. The replaceable cartridge (1002) according to any one of claims 1 to 6, wherein the second pump (1070) is downstream of the first pump (1028).

8. The replaceable cartridge (1002) according to any one of claims 1 to 7, wherein the second pump (1070) is a positive displacement piston pump.

9. The replaceable cartridge (1002) according to any one of claims 1 to 8, wherein the second pump (1070) comprises:
a housing (1072) comprising an inlet (1074) having an inlet valve (1076), an outlet (1078) having an outlet valve (1080), and a pumping chamber (1082) between the inlet valve (1078) and the outlet valve (1080); and
a piston (1084) disposed within the pumping chamber (1082) and configured for reciprocal movement within the pumping chamber (1082) via a drive member (1086).

10. The replaceable cartridge (1002) according to any one of claims 1 to 9, further comprising a filter (1056) in fluid communication with the recirculation loop (1026), wherein the filter (1056) is configured for filtering the coating circulating through the recirculation loop (1026).

11. The replaceable cartridge (1002) according to claim 10, wherein the filter (1056) is downstream of the first pump (1028) and upstream of the second pump (1070).

12. The replaceable cartridge (1002) according to any one of claims 1 to 11, further comprising a debubbling system (1058) in fluid communication with the recirculation loop (1026), the debubbling system (1058) configured for removing air bubbles in the coating circulating through the recirculation loop (1026).

13. The replaceable cartridge (1002) according to claim 12, wherein the debubbling system (1058) is downstream of the first pump (1028) and upstream of the second pump (1070).

14. The replaceable cartridge (1002) according to any one of claims 1 to 13, further comprising a frame (1012) for mounting the reservoir (1016), the first pump (1028), and the second pump (1070).

15. The replaceable cartridge (1002) according to claim 14, wherein the frame (1012) comprises electrical connectors for connecting the first pump (1028) and the second pump (1070) to the coating system (100).

## Patentansprüche

1. Austauschbare Kartusche (1002) für ein Beschichtungssystem (100), wobei die austauschbare Kartusche (1002) Folgendes umfasst:
einen Behälter (1016), der dazu ausgelegt ist, ein Volumen einer Beschichtung zu enthalten;
eine Rezirkulationsschleife (1026) mit einem Einlass und einem Auslass in Fluidverbindung mit dem Behälter (1016); und
eine erste Pumpe (1028) in Fluidverbindung mit der Rezirkulationsschleife (1026), wobei die erste Pumpe (1028) zum Rezirkulieren der Beschichtung von dem Behälter (1016) durch die Rezirkulationsschleife (1026) ausgelegt ist; **dadurch gekennzeichnet, dass** die austauschbare Kartusche (1002) ferner eine zweite Pumpe (1070) in Fluidverbindung mit der Rezirkulationsschleife (1026) umfasst, wobei die zweite Pumpe (1070) dazu ausgelegt ist, die Beschichtung selektiv aus der Rezirkulationsschleife (1026) anzusaugen und die Beschichtung zu einer Beschichtungsvorrichtung (300) zu liefern.

2. Austauschbare Kartusche (1002) nach Anspruch 1, wobei die erste Pumpe (1028) zwischen dem Einlass und dem Auslass der Rezirkulationsschleife (1026) mit der Rezirkulationsschleife (1026) verbunden ist.

3. Austauschbare Kartusche (1002) nach Anspruch 1 oder Anspruch 2, wobei die erste Pumpe (1028) zum kontinuierlichen Rezirkulieren der Beschichtung durch die Rezirkulationsschleife (1026) ausgelegt ist.

4. Austauschbare Kartusche (1002) nach einem der Ansprüche 1 bis 3, wobei die erste Pumpe (1028) eine Membranpumpe ist.

5. Austauschbare Kartusche (1002) nach einem der Ansprüche 1 bis 4, wobei die erste Pumpe (1028) Folgendes umfasst:
ein Gehäuse (1032) mit einer ersten Kammer (1034) und einer zweiten Kammer (1036) in Fluidisolation von der ersten Kammer (1034) durch eine flexible Membran (1038);
einen Flüssigkeitseinlass (1040) und einen Flüssigkeitsauslass (1042) in Fluidverbindung mit der ersten Kammer (1034), wobei der Flüssigkeitseinlass (1040) ein Flüssigkeitseinlassrückschlagventil (1044) aufweist und der Flüssigkeitsauslass (1042) ein Flüssigkeitsauslassrückschlagventil (1046) aufweist;
einen Lufteinlass (1048) und einen Luftauslass (1050) in Fluidverbindung mit der zweiten Kammer (1036), wobei der Lufteinlass (1048) ein Lufteinlassrückschlagventil (1052) aufweist, das zwischen einer geöffneten Einlassposition und einer geschlossenen Einlassposition betätigbar ist, und wobei der Luftauslass ein Luftauslassrückschlagventil (1054) aufweist, das zwischen einer geöffneten Auslassposition und einer geschlossenen Auslassposition betätigbar ist.

6. Austauschbare Kartusche (1002) nach Anspruch 5, wobei das Lufteinlassrückschlagventil (1052) unabhängig von einer Betätigung des Luftauslassrückschlagventils (1054) zwischen der geöffneten Auslassposition und der geschlossenen Auslassposition zwischen der geöffneten Einlassposition und der geschlossenen Einlassposition betätigbar ist.

7. Austauschbare Kartusche (1002) nach einem der Ansprüche 1 bis 6, wobei sich die zweite Pumpe (1070) stromabwärts der ersten Pumpe (1028) befindet.

8. Austauschbare Kartusche (1002) nach einem der Ansprüche 1 bis 7, wobei die zweite Pumpe (1070) eine Verdrängerkolbenpumpe ist.

9. Austauschbare Kartusche (1002) nach einem der Ansprüche 1 bis 8, wobei die zweite Pumpe (1070) Folgendes umfasst:
ein Gehäuse (1072) mit einem Einlass (1074) mit einem Einlassventil (1076), einem Auslass (1078) mit einem Auslassventil (1080) und einer Pumpkammer (1082) zwischen dem Einlassventil (1078) und dem Auslassventil (1080); und
einen Kolben (1084), der in der Pumpkammer (1082) angeordnet und zur Hin- und Herbewegung innerhalb der Pumpkammer (1082) über ein Antriebselement (1086) ausgelegt ist.

10. Austauschbare Kartusche (1002) nach einem der Ansprüche 1 bis 9, ferner umfassend einen Filter (1056) in Fluidverbindung mit der Rezirkulationsschleife (1026), wobei der Filter (1056) zum Filtern der durch die Rezirkulationsschleife (1026) zirkulierenden Beschichtung ausgelegt ist.

11. Austauschbare Kartusche (1002) nach Anspruch 10, wobei sich der Filter (1056) stromabwärts der ersten Pumpe (1028) und stromaufwärts der zweiten Pumpe (1070) befindet.

12. Austauschbare Kartusche (1002) nach einem der Ansprüche 1 bis 11, ferner umfassend ein Blasenentfernungssystem (1058) in Fluidverbindung mit der Rezirkulationsschleife (1026), wobei das Blasenentfernungssystem (1058) zum Entfernen von Luftblasen in der durch die Rezirkulationsschleife (1026) zirkulierenden Beschichtung ausgelegt ist.

13. Austauschbare Kartusche (1002) nach Anspruch 12, wobei sich das Blasenentfernungssystem (1058) stromabwärts der ersten Pumpe (1028) und stromaufwärts der zweiten Pumpe (1070) befindet.

14. Austauschbare Kartusche (1002) nach einem der Ansprüche 1 bis 13, ferner umfassend einen Rahmen (1012) zur Montage des Behälters (1016), der ersten Pumpe (1028) und der zweiten Pumpe (1070).

15. Austauschbare Kartusche (1002) nach Anspruch 14, wobei der Rahmen (1012) elektrische Verbinder zum Verbinden der ersten Pumpe (1028) und der zweiten Pumpe (1070) mit dem Beschichtungssystem (100) umfasst.

## Revendications

1. Cartouche remplaçable (1002) pour un système de revêtement (100), la cartouche remplaçable (1002) comprenant :
un réservoir (1016) configuré pour contenir un volume d'un revêtement ;
une boucle de recirculation (1026) ayant une entrée et une sortie en communication fluidique avec le réservoir (1016) ; et
une première pompe (1028) en communication fluidique avec la boucle de recirculation (1026), la première pompe (1028) étant configurée pour faire recirculer le revêtement provenant du réservoir (1016) à travers la boucle de recirculation (1026) ; **caractérisée en ce que** la cartouche remplaçable (1002) comprend en outre une seconde pompe (1070) en communication fluidique avec la boucle de recirculation (1026), la seconde pompe (1070) étant configurée pour aspirer sélectivement le revêtement de la boucle de recirculation (1026) et le distribuer à un dispositif de revêtement (300).

2. Cartouche remplaçable (1002) selon la revendication 1, dans laquelle la première pompe (1028) est raccordée à la boucle de recirculation (1026) entre l'entrée et la sortie de la boucle de recirculation (1026).

3. Cartouche remplaçable (1002) selon la revendication 1 ou la revendication 2, dans laquelle la première pompe (1028) est configurée pour faire recirculer en continu le revêtement à travers la boucle de recirculation (1026).

4. Cartouche remplaçable (1002) selon l'une quelconque des revendications 1 à 3, dans laquelle la première pompe (1028) est une pompe à membrane.

5. Cartouche remplaçable (1002) selon l'une quelconque des revendications 1 à 4, dans laquelle la première pompe (1028) comprend :
un carter (1032) ayant une première chambre (1034) et une seconde chambre (1036) isolée fluidiquement de la première chambre (1034) par l'intermédiaire d'une membrane souple (1038) ;
une entrée de liquide (1040) et une sortie de liquide (1042) en communication fluidique avec la première chambre (1034), l'entrée de liquide (1040) comportant un clapet anti-retour d'entrée de liquide (1044) et la sortie de liquide (1042) comportant un clapet anti-retour de sortie de liquide (1046) ;
une entrée d'air (1048) et une sortie d'air (1050) en communication fluidique avec la seconde chambre (1036), l'entrée d'air (1048) comportant un clapet anti-retour d'entrée d'air (1052) pouvant être actionné entre une position d'entrée ouverte et une position d'entrée fermée, et la sortie d'air comportant un clapet anti-retour de sortie d'air (1054) pouvant être actionné entre une position de sortie ouverte et une position de sortie fermée.

6. Cartouche remplaçable (1002) selon la revendication 5, dans laquelle le clapet anti-retour d'entrée d'air (1052) peut être actionné entre la position d'entrée ouverte et la position d'entrée fermée indépendamment de l'actionnement du clapet anti-retour de sortie d'air (1054) entre la position de sortie ouverte et la position de sortie fermée.

7. Cartouche remplaçable (1002) selon l'une quelconque des revendications 1 à 6, dans laquelle la seconde pompe (1070) est en aval de la première pompe (1028).

8. Cartouche remplaçable (1002) selon l'une quelconque des revendications 1 à 7, dans laquelle la seconde pompe (1070) est une pompe à piston volumétrique.

9. Cartouche remplaçable (1002) selon l'une quelconque des revendications 1 à 8, dans laquelle la seconde pompe (1070) comprend :
un carter (1072) comprenant une entrée (1074) ayant une vanne d'entrée (1076), une sortie (1078) ayant une vanne de sortie (1080), et une chambre de pompage (1082) entre la vanne d'entrée (1078) et la vanne de sortie (1080) ; et
un piston (1084) disposé à l'intérieur de la chambre de pompage (1082) et configuré pour effectuer un mouvement alternatif à l'intérieur de la chambre de pompage (1082) par l'intermédiaire d'un élément d'entraînement (1086).

10. Cartouche remplaçable (1002) selon l'une quelconque des revendications 1 à 9, comprenant en outre un filtre (1056) en communication fluidique avec la boucle de recirculation (1026), le filtre (1056) étant configuré pour filtrer le revêtement circulant à travers la boucle de recirculation (1026).

11. Cartouche remplaçable (1002) selon la revendication 10, dans laquelle le filtre (1056) est en aval de la première pompe (1028) et en amont de la seconde pompe (1070).

12. Cartouche remplaçable (1002) selon l'une quelconque des revendications 1 à 11, comprenant en outre un système d'élimination des bulles (1058) en communication fluidique avec la boucle de recirculation (1026), le système d'élimination des bulles (1058) étant configuré pour éliminer les bulles d'air dans le revêtement circulant à travers la boucle de recirculation (1026).

13. Cartouche remplaçable (1002) selon la revendication 12, dans laquelle le système d'élimination des bulles (1058) est en aval de la première pompe (1028) et en amont de la seconde pompe (1070).

14. Cartouche remplaçable (1002) selon l'une quelconque des revendications 1 à 13, comprenant en outre un châssis (1012) pour la fixation du réservoir (1016), de la première pompe (1028) et de la seconde pompe (1070).

15. Cartouche remplaçable (1002) selon la revendication 14, dans laquelle le châssis (1012) comprend des connecteurs électriques pour connecter la première pompe (1028) et la seconde pompe (1070) au système de revêtement (100).
